Europäisches Patentamt

**European Patent Office**

Office européen des brevets

(19)

(11) Numéro de publication: **0 197 870**
**A1**

(12)

# DEMANDE DE BREVET EUROPEEN

(21) Numéro de dépôt: **86420095.1**

(22) Date de dépôt: **27.03.86**

(51) Int. Cl.⁴: **A 47 J 47/16**
**B 25 H 3/04, A 47 F 5/08**

(30) Priorité: **28.03.85 FR 8505197**

(43) Date de publication de la demande:
**15.10.86 Bulletin 86/42**

(84) Etats contractants désignés:
**BE CH DE GB IT LI NL**

(71) Demandeur: **MIFLEX S.A.**
**Sous-le-Pré**
**F-39200 Saint-Claude(FR)**

(72) Inventeur: **Reymondet, Bernard**
**8 avenue de la Gare**
**Saint-Claude (Jura)(FR)**

(72) Inventeur: **Grandclement, Christian**
**2 rue des Perrières**
**Saint-Claude (Jura)(FR)**

(74) Mandataire: **Maureau, Bernard et al,**
**Cabinet GERMAIN & MAUREAU 20, boulevard E.**
**Deruelle B.P. 3011**
**F-69392 Lyon Cédex 03(FR)**

(54) **Support pour ustensiles menagers.**

(57) Ce support est constitué en combinaison par un grillage (1) en matière plastique moulée utilisé à la fixation du support sur l'organe: cloison, porte ou similaire devant recevoir ce support, et par des clips (5) destinés à la fixation, sur les traverses (3) ou les longerons (2) du grillage (1), d'organes agencés pour retenir tels ou tels ustensiles sur le support.

FIG. 1

EP 0 197 870 A1

1

# SUPPORT POUR USTENSILES MENAGERS

Pour faciliter le rangement d'objets, notamment dans le domaine vestimentaire, il est connu de subdiviser des armoires en compartiments par superposition et/ou juxtaposition de conteneurs ; et il est connu de réaliser ces conteneurs sous la forme de grillages qui, moulés en matière plastique, jouent le rôle des diverses faces du conteneur et sont reliés par des pièces d'assemblage comportant deux parties en forme de gouttières dans lesquelles s'emboîtent élastiquement deux tiges contigües (longerons ou traverses) de deux faces adjacentes du conteneur. Par de simples effets de clipsage, il est ainsi possible à l'utilisateur de mettre lui-même un conteneur en état d'utilisation, alors qu'il peut être stocké et transporté à plat.

L'invention a pour objet l'application de ce principe et l'adaptation de sa mise en oeuvre à des supports pour ustensiles ménager ; et c'est ainsi qu'elle concerne un support constitué en combinaison par un grillage en matière plastique moulée utilisé à la fixation du support sur l'organe : cloison, porte ou similaire devant recevoir ce support, et par des clips destinés à la fixation, sur les traverses ou les longerons du grillage, d'organes agencés pour retenir tels ou tels ustensiles sur le support.

Ces clips ont en fait un rôle double, puisqu'ils ont pour fonction d'une part, de coopérer avec un longeron ou une traverse du grillage, et d'autre part, de servir d'organe de support ou de retenue direct ou indirect à un ou à des ustensiles ménagers.

Pour remplir leur première fonction, ces clips comportent une gouttière coopérant élastiquement avec un longeron ou une traverse du grillage ; et pour remplir leur deuxième fonction, ils présentent un agencement complémentaire dépendant de celui de l'ustensile à supporter. C'est ainsi que, dans le cas de son utilisation pour la fixation d'ustensiles comportant des oreilles ou des trous d'accrochage ou de préhension, ces clips viennent de moulage en matière plastique avec une tête munie d'un crochet de forme quelconque, par exemple crochet simple, crochet en forme de berceau... C'est ainsi encore que, dans le cas de son utilisation à la fixation d'ustensiles ne comportant pas de moyens d'accrochage, ce qui est le cas par exemple pour des couteaux, les clips comportent deux gouttières contigües, comme cela est connu en soi ; mais alors que l'une de ces gouttières coopère avec un longeron du grillage

2

servant de support général, l'autre coopère avec un longeron contigu d'un grillage complémentaire situé dans un plan parallèle à celui du premier et à une distance qui est déterminée par l'écartement des deux gouttières du clips et est suffisamment faible pour ne permettre le passage que d'une partie de l'ustensile à supporter.

L'invention sera bien comprise d'ailleurs, à l'aide de la description qui suit, en référence au dessin schématique annexé représentant, à titre d'exemple non limitatif, deux formes d'exécution de ce support pour ustensiles ménagers.

Figure 1 est une vue en perspective d'un premier support équipé de crochets simples permettant la suspension d'objets tels que des casseroles ;

Figure 2 est, à plus grande échelle, une vue en coupe horizontale suivant II-II de figure 1 ;

Figure 3 est une vue en perspective d'un support destiné à recevoir, dans sa partie supérieure, des ustensiles tels que des couteaux, et dans sa partie inférieure, des couvercles de casseroles ou similaires ;

Figures 4 et 5 en sont, à plus grande échelle, des vues en coupe respectivement suivant IV-IV et V-V de figure 3.

Dans tous les cas, le support qui fait l'objet de l'invention comporte un premier élément de base consistant en un grillage moulé en matière plastique. Ce grillage est désigné de façon générale par (1) et il est formé par une pluralité de longerons (2) et de traverses (3). Pour sa fixation sur l'organe devant le recevoir, par exemple sur un panneau ou sur la face arrière d'une porte, ce grillage (1) coopère avec des crochets (4) de suspension et de fixation.

Le grillage (1) sert en réalité d'organe permettant la suspension des ustensiles. Pour cela, les longerons (2) ou les traverses (3) du grillage sont mis à profit pour servir à la fixation de clips désignés de façon générale par (5). Dans tous les cas, chaque clips (5) comporte au moins une partie (6) qui présente une forme générale de gouttière et est destinée à s'emboîter élastiquement sur un longeron (2) ou une traverse (3) du grillage (1).

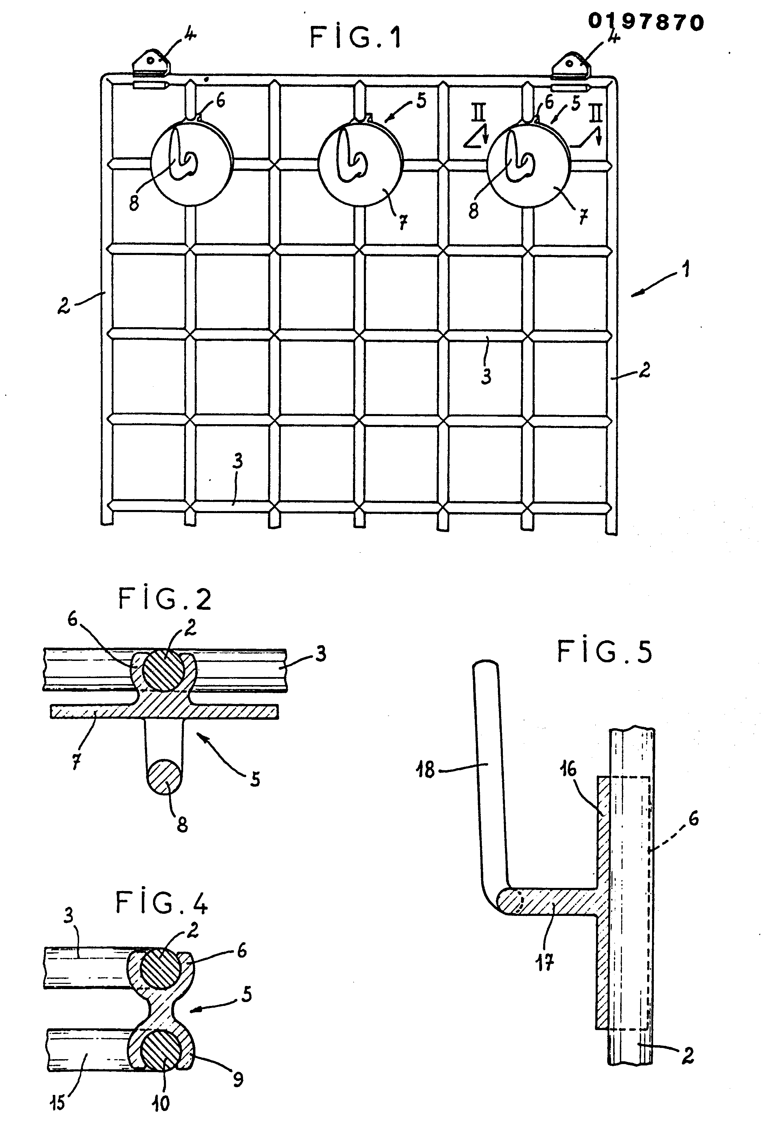

Dans le cas de la forme d'exécution représentée aux figures 1 et 2, chaque clips (5) est constitué en combinaison par la gouttière (6) permettant sa fixation sur le grillage (1) et par une tête (7) qui, dans le cas représenté au dessin, présente une forme circulaire ; et sur la face avant de cette tête (7) apparaît une pièce (8) en forme de crochet. L'ensemble gouttière (6), tête (7) et crochet (8) vient de moulage en matière plastique en une seule pièce.

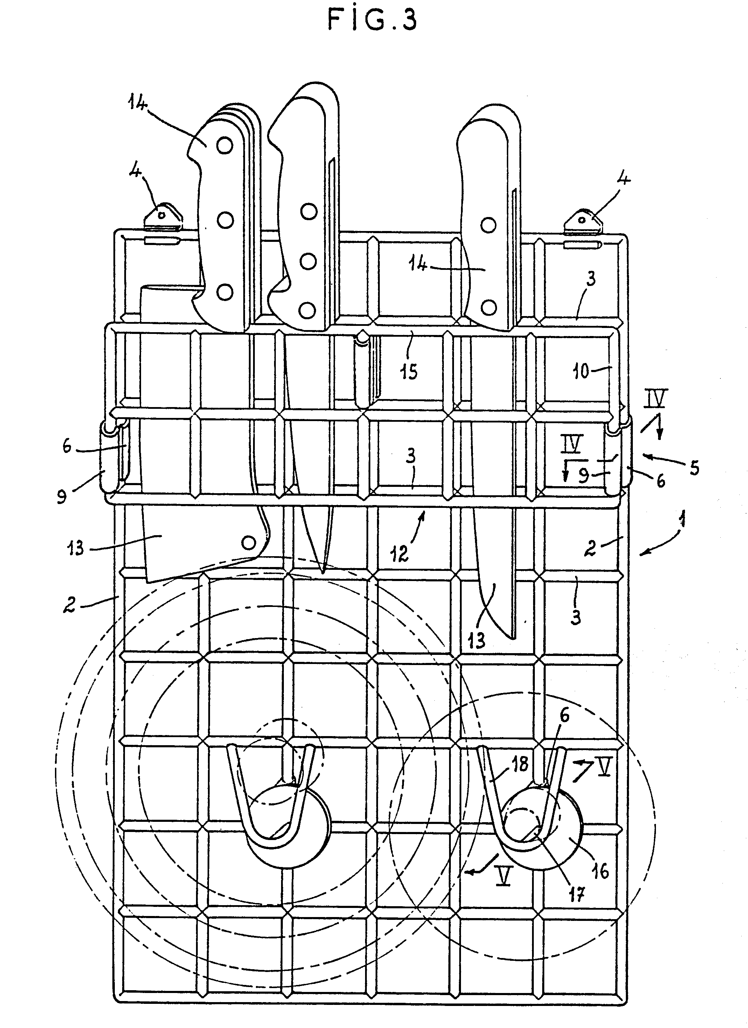

Dans la forme d'exécution représentée aux figures 3 à 5, chaque clips (5) comporte non pas une seule gouttière (6), mais deux gouttières parallèles désignées respectivement par (6) et (9). Ces deux gouttières sont pratiquement contigües et ont les mêmes dimensions afin de pouvoir être utilisées soit l'une, soit l'autre en coopération avec un longeron (2) du grillage (1) ; et l'autre gouttière, à savoir celle (9) dans le cas représenté au dessin, coopère élastiquement avec un longeron (10) d'un petit grillage qui, désigné de façon générale par (12), se trouve situé en avant de celui (1), mais parallèlement à celui-ci. Les deux gouttières (6) et (9) étant très rapprochées l'une de l'autre, l'écartement entre les deux grillages (1) et (12) est suffisamment faible pour qu'il délimite un interstice pouvant seulement être traversé par des pièces ou des organes très peu épais. C'est donc ainsi que, grâce au grillage complémentaire (12), il est possible de fixer sur le grillage (1) des ustensiles tels que des couteaux dont la lame (13) passe entre les deux grillages (1) et (12) alors que le manche (14) reste en appui au-dessus des traverses respectivement (3) du grillage (1) et (15) du grillage (12).

Sur le même grillage (1) peuvent bien entendu être fixés des organes de formes diverses adaptées à l'agencement et à la forme des ustensiles à supporter. C'est donc ainsi que sur le grillage (1) visible à la figure 3, des crochets, tels que celui (8) des figures 1 et 2, pourraient être prévus au-dessous ou au-dessus du grillage (12) servant à la retenue des couteaux (13, 14) ; et c'est ainsi encore que, comme le montre la figure 3, il peut être prévu au-dessous du grillage (12) des organes permettant la fixation d'ustensiles tels que des couvercles de casseroles ou similaires. Les figures 3 et 5 montrent de tels organes. Ils sont constitués par une gouttière (6), par une tête (16), par une tige horizontale (17) et par une tige en forme de V (18) destinée à servir de berceau au bouton de préhension d'un couvercle de casserole ou similaires.

Quelle que soit la forme des organes servant directement ou indirectement à la fixation des ustensiles, le support qui fait l'objet de l'invention présente l'avantage de permettre à l'utilisateur d'adapter la présentation de son support en fonction de ses désirs, et ce avec la possibilité de modifier à tout moment les positions relatives des divers ustensiles à suspendre, étant donné que la mise en place des organes servant à l'accrochage se fait par une simple opération de clipsage.

Comme il va de soi, l'invention ne se limite pas aux seules formes d'exécution de ce support pour ustensiles ménagers qui ont été ci-dessus indiquées à titre d'exemples : elle en embrasse, au contraire, toutes les variantes de réalisation.

5

## REVENDICATIONS

1 - Support pour ustensiles ménagers, caractérisé en ce qu'il est constitué en combinaison par un grillage (1) en matière plastique moulée utilisé à la fixation du support sur l'organe : cloison, porte ou similaire devant recevoir ce support, et par des clips (5) destinés à la fixation, sur les traverses (3) ou les longerons (2) du grillage (1), d'organes agencés pour retenir tels ou tels ustensiles sur le support.

2 - Support pour ustensiles ménagers selon la revendication 1, caractérisé en ce que ses clips (5) viennent de moulage en matière plastique avec une tête (7, 16) munie d'un crochet de forme quelconque. par exemple crochet simple (8), crochet en forme de berceau (18)...

3 - Support pour ustensiles ménagers selon la revendication 1. caractérisé en ce que ses clips (5) comportent deux gouttières contigües (6, 9). la gouttière (6) coopérant avec un longeron (2) du grillage (1) servant de support général. et l'autre gouttière (9) coopérant avec un longeron contigu (10) d'un grillage complémentaire (12) situé dans un plan parallèle à celui du premier et à une distance qui est déterminée par l'écartement des deux gouttières (6, 9) du clips et est suffisamment faible pour ne permettre le passage que d'une partie de l'ustensile à supporter.

FIG.1

0197870

FIG.2

FIG.5

FIG.4

FIG.3

0197870

<table>
<tr><td>Office européen des brevets</td><td>RAPPORT DE RECHERCHE EUROPEENNE</td><td>0197870</td></tr>
</table>

# RAPPORT DE RECHERCHE EUROPEENNE

**Office européen des brevets**

**0197870**
Numéro de la demande

EP 86 42 0095

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl 4) |
|---|---|---|---|
| X | US-A-4 234 094 (JORGENSEN) * En entier * | 1,3 | A 47 J 47/16 B 25 H 3/04 A 47 F 5/08 |
| | --- | | |
| X | GB-A- 965 495 (NILSON) * En entier * | 1,2 | |
| | --- | | |
| Y | FR-A-1 425 848 (HALL & GOULDING LTD.) * En entier * | 1 | |
| | --- | | |
| Y | US-A-3 568 853 (FEIBELMAN) * Figure 2 * | 1 | |
| A | | 2 | |
| | --- | | DOMAINES TECHNIQUES RECHERCHES (Int. Cl 4) |
| X | GB-A-2 119 231 (HELLER DESIGNS INC.) * Figures 2,4,5,8; page 2, lignes 69-73 * | 1,2 | A 47 J A 47 G B 25 H A 47 F A 47 L |
| | --- | | |
| X | GB-A-2 098 054 (ALLSTAR) * Figures 1,6; page 2, lignes 70-91 * | 1,2 | |
| | ----- | | |

Le présent rapport de recherche a été établi pour toutes les revendications

| Lieu de la recherche | Date d'achèvement de la recherche | Examinateur |
|---|---|---|
| LA HAYE | 09-07-1986 | SCHARTZ J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82